# EUROPÄISCHE PATENTSCHRIFT

(11) **EP 0 440 024 B1**
(45) Veröffentlichungstag und Bekanntmachung des Hinweises auf die Patenterteilung: **20.07.1994**
(21) Anmeldenummer: 91100216.0
(22) Anmeldetag: 09.01.1991
(51) Int. Cl.: H01S 3/06, H01S 3/23, H01S 3/094

(54) **Mehrstufiger faseroptischer Verstärker**
Multistage optical fibre amplifier
Amplificateur multi-étage à fibre optique

(30) Priorität: 27.01.1990 DE 4002369
(43) Veröffentlichungstag der Anmeldung: 07.08.1991
(73) Patentinhaber: Alcatel SEL Aktiengesellschaft, D-70435 Stuttgart (DE)
(72) Erfinder: Heidemann, Rolf, Dr., W-7146 Tamm (DE)
(74) Vertreter: Kugler, Hermann, Dipl.-Phys.

(56) Entgegenhaltungen:
- US-A- 4 680 769
- PROCEEDINGS ECOC 88,PAPER PDA-8, BRIGHTON,UK Seiten 33 - 36; N.EDAGAWA ET AL: 'Non-regenerative optical transmission experiment using 12 Er-doped fibre amplifiers'
- PROCEEDINGS ECOC 88,PAPER PDA-10, BRIGHTON,UK Seiten 42 - 45; A.RIGHETTI ET AL: 'An 11 GBIT/sec,260 km transmission experiment using a directly-modulated 1536 nm DFB laser with two Er-doped fiber amplifiers and clock recovery'
- PROCEEDINGS ECOC 88, BRIGHTON,UK Seiten 49 - 53; D.N.PAYNE ET AL.: 'Rare-earth-doped fibre lasers and amplifiers'
- PROCEEDINGS ECOC 88 BRIGHTON,UK Seiten 58 - 61; T.J.WHITLEY ET AL: '1.54 mum Er3+doped fibre amplifier optically pumped at 807 nm'

## Beschreibung

Die vorliegende Erfindung bezieht sich auf einen faseroptischen Verstärker nach dem Oberbegriff des Anspruchs 1.

Aus Proc. ECOC 88, Brighton, S. 49 ff. ist es bekannt, daß Lichtleitfasern, die mit einem oder mit mehreren Lanthanoiden, wie bspw. Neodym, Erbium, Ytterbium dotiert sind und als Basis SiO₂ oder Fluoroidglas besitzen, bei Anregung durch Licht bestimmter Wellenlänge als Verstärker unabhängig von der Polarisation der erregenden Lichtwelle wirken. Gemäß Proc. ECOC 88, Brighton, S. 58 ff. wurde eine mit Er³⁺-dotierte SiO₂-Faser über einen Richtkoppler mit Signallicht gespeist und mit Pumplichtquellen unterschiedlicher Pumpleistungen verbunden. Dabei hat sich herausgestellt, daß der Grad der Verstärkung und die Wellenlänge maximaler Verstärkung in den Bereichen zwischen 1520 und 1560 nm von der Pumpleistung der Pumplichtquelle abhängig ist. Als Laserlichtquelle wurde ein 870 nm-Halbleiterlaser verwendet.

Es wurde ferner auch schon darüber berichtet, daß sich die Wellenlänge, bei der eine maximale Verstärkung im Faserstück auftritt, auch in Abhängigkeit von der Dotierung des Faserstücks ändert.

Bei bisher versuchsweise verwendeten faseroptischen Verstärkern der eingangs genannten Art erhielt man eine Verstärkung in Abhängigkeit von der Wellenlänge des Signallichtes, wobei der Bereich maximaler Verstärkung relativ schmalbandig ist und beiderseits dieses schmalbandigen Bereichs maximaler Verstärkung expontentiell abnimmt, wie dies aus der oben an zweiter Stelle genannten Literaturstelle hervorgeht. In Glasfaserübertragungssystemen, die mit Intensitätsmodulation und direkter Detektion arbeiten, kann jedoch nur eine möglichst breitbandige Übertragungsfunktion bei möglichst geringer Welligkeit zugelassen werden.

Aufgabe der vorliegenden Erfindung ist es, einen faseroptischen Verstärker der eingangs genannten Art zu schaffen, der eine über einen breiten Wellenlängenbereich von einigen 10 nm möglichst konstante Verstärkung bietet.

Zur Lösung dieser Aufgabe sind bei einem faseroptischen Verstärker der genannten Art die im Anspruch 1 angegebenen Merkmale vorgesehen.

Durch die erfindungsgemäßen Maßnahmen ist es möglich, jede einzelne Verstärkerstufe mit einer individuellen Verstärkungsfunktion auszustatten, deren Wellenlängenbereich maximaler Verstärkung gegenüber dem der benachbarten Stufe verschoben ist, so daß sich am Signalausgang des faseroptischen Verstärkers eine resultierende Verstärkerfunktion in Abhängigkeit von der Wellenlänge ergibt, deren maximale Verstärkung über einen breiten Wellenlängenbereich nach Art einer Bandfiltercharakteristik ohne wesentliche Welligkeit in etwa konstant ist. Ein derartiger faseroptischer Verstärker ist in vorteilhafter Weise für Glasfaserübertragungssysteme besonders geeignet. Ein weiterer Vorteil eines solchen faseroptischen Verstärkers besteht neben der großen konstanten Verstärkung über eine große Bandbreite außerdem in einer großen Sättigungsausgangsleistung und einer niedrigen Rauschzahl, da sowohl die Eingangsstufe auf geringstes Rauschen als auch die Ausgangsstufe auf große Ausgangsleistung separat optimiert werden können.

Zweckmäßigerweise können dabei die Merkmale gemäß Anspruch 2 und/oder Anspruch 3 vorgesehen sein. Die Bereitstellung unterschiedlicher Faserstücke kann in einfacher Weise dadurch erfolgen, daß unterschiedliche Faserarten in großer Länge hergestellt werden und zur Bildung eines derartigen faseroptischen Verstärkers jeweils auf entsprechende Länge geschnitten und in die einzelnen Verstärkerstufen in unterschiedlicher Weise eingesetzt werden.

Weitere vorteilhafte Ausgestaltungen ergeben sich aus der Kombination mit einzelnen oder mehreren der Unteransprüche 4 bis 7. Insbesondere das Vorsehen der Merkmale gemäß Anspruch 6 und/oder 7 ergibt eine äußerst wirtschaftliche Bereitstellung von Pumplicht.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in schematischer Darstellung einen n-stufigen faseroptischen Verstärker gemäß einem bevorzugten Ausführungsbeispiel vorliegender Erfindung und
- Figur 2: Beispiele von Verstärkerkennlinien einzelner Verstärkerstufen und eine daraus resultierende Kennlinie eines aus drei Verstärkerstufen bestehenden faseroptischen Verstärkers gemäß dem Ausführungsbeispiel der Fig. 1.

Der in der Zeichnung gemäß einem bevorzugten Ausführungsbeispiel vorliegender Erfindung dargestellte faseroptische Verstärker 10 ermöglicht durch Kaskadierung von n-Verstärkerstufen 11, 12...1n unter wirtschaftlicher Bereitstellung von Pumplichtquellen eine erhebliche und insbesondere über ein breites Frequenzband gleichmäßige Verstärkung V von auf Übertragungsfaserstrecken ankommendem Signallicht, dessen Wellenlänge vorzugsweise in 1536 nm-Band λ_{S} liegt.

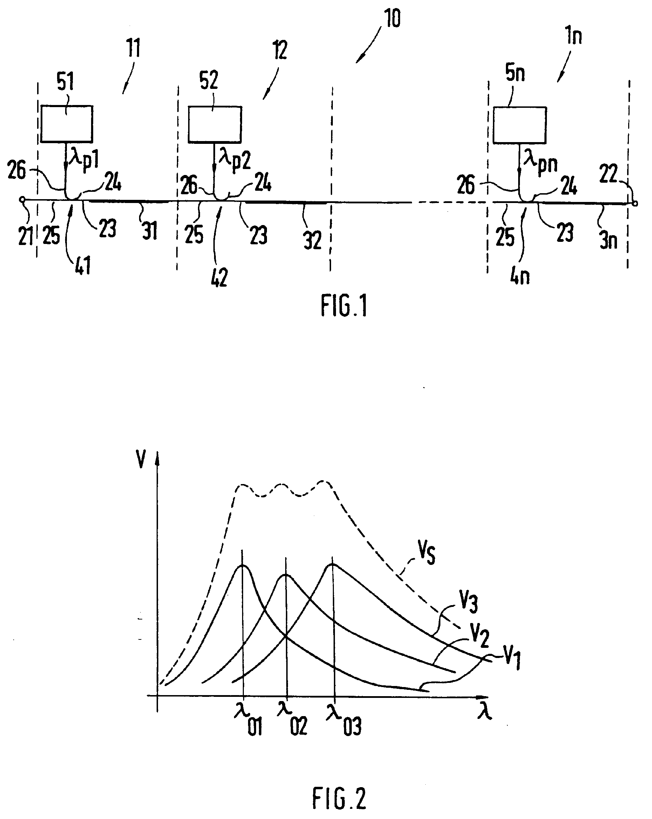

Der faseroptische Verstärker 10 besitzt einen Signallichteingang 21 und einen Signallichtausgang 22, über die er bspw. innerhalb einer Übertragungsfaserstrecke aus bspw. Monomodefasern angeordnet ist. Jede Verstärkerstufe 11, 12 ... 1n des faseroptischen Verstärkers 10 besitzt gemäß Fig. 1 ein Signallicht verstärkendes Faserstück 31, 32 ... 3n bestimmter Länge L₁, L₂ ... Lₙ, dessen Grundmaterial bspw. SiO₂/Ge, SiO₂/Al oder dgl. ist und mit mindestens einem Lanthanoid, bspw. Er³⁺ in bestimmter Art und Menge dotiert ist.

Jedes Faserstück 31, 32 ... 3n ist am in Signallichtrichtung eingangsseitigen Ende mit einem ersten Ausgangsende 23 eines wellenlängenselektiven Richtkopplers 41, 42 ... 4n verbunden, dessen zweites Ausgangsende 24 reflektionsfrei abgeschlossen ist und dessen zweites Eingangsende 26 mit einer Pumplichtquelle 51, 52 ... 5n verbunden ist.

Das erste Eingangsende 25 des Richtkopplers 41 der ersten Verstärkerstufe 11 ist mit dem Signallichteingang 21 des faseroptischen Verstärkers 10 verbunden, während jedes erste Eingangsende 25 der Richtkoppler 42 ... 4n mit dem in Signallichtrichtung ausgangsseitigen Ende des Faserstücks 31, 32 ... 3n-1 der vorhergehenden Verstärkerstufe 11, 12, 1n-1 verbunden ist.

Jede Pumplichtquelle 51, 52 ... 5n emittiert Pumplicht im 807 nm-Bereich (λₚ₁,λₚ₂ ...λₚₙ) und ist durch einen kostengünstigen Druckerlaser, CD-Laser oder dgl. verwirklicht. Bspw. besitzen derartige Laser Pumpleistungen von einigen 10 mW.

Jedes Faserstück 31, 32 .... 3n, dessen Lanthanoid-Ionen vom Pumplicht (Zₚ) angeregt werden, in ein höheres Energieniveau zu steigen, welche Energie dann durch das Signallicht (λ_{S}) freigesetzt wird, besitzt eine Verstärkungskennlinie V₁,V₂ ... Vₙ in Abhängigkeit von der Wellenlänge des Signallichtbandes, wie sie in Fig. 2 bei 61, 62, 63 dargestellt ist. Diese Verstärkungskennlinie besitzt bei einer bestimmten Wellenlänge λ₀₁, λ₀₂ ... λ₀ₙ des Signallichtes ein Maximum relativ geringer Bandbreite.

Werden Pumplichtquellen 51, 52 ... 5n im wesentlichen gleicher Pumpleistung verwendet, so ergeben sich größenordnungsmäßig im wesentlichen dieselben Kennlinien, d.h. die Kennlinie V₁ ,V₂ und V₃ (bei drei Verstärkerstufen 11, 12, 13) besitzen größenordnungsmäßig dieselbe maximale Verstärkung bei jeweils gleicher Bandbreite. Die Verschiebung der Kennlinien V₁ ,V₂,V₃ in Abhängigkeit von der Wellenlänge des übertragenen Signallichtbandes, d.h. die Verschiebung des Wellenlängenbereiches mit maximaler Verstärkung wird durch verschiedenartige Ausgestaltung der Faserstücke 31, 32, ... 3n in den einzelnen Verstärkerstufen 11, 12 ... 1n erreicht. Bspw. werden unterschiedliche Längen L₁ ,L₂ ... Lₙ (z.B. im Bereich von 1 bis 5m) für die einzelnen Faserstücke 31, 32 .... 3n vorgesehen. Stattdessen oder zusätzlich hierzu ist es möglich, die Art und Menge der Dotierung des Grundmaterials der Faser der einzelnen Faserstücke 31, 32 ... 3n zu ändern. Bspw. kann das Fasergrundmaterial außer mit Er³⁺ mit Yb, P und Al oder dgl. zusätzlich dotiert sein. Es ist außerdem möglich, das oder die Dotierstoffe an anderer Stelle des Faserquerschnitts vorzusehen. Außerdem oder zusätzlich kann noch die Fasergeometrie der einzelnen Faserstücke in den Verstärkerstufen verändert sein.

Jedenfalls ergibt sich durch die unterschiedliche Wellenlängenlagen der Verstärkungskennlinien V₁,V₂ ... Vₙ der einzelnen Verstärkerstufen gemäß Fig. 3 am Signalausgang 22 des faseroptischen Verstärkers 10 eine resultierende Verstärkungskennlinie V_{S}, die sich aus der Summe der Einzelkennlinien V₁+V₂+ .. . +Vₙ ergibt und die bei erheblich geringerer Welligkeit eine im wesentlichen gleichmäßige maximale Verstärkung über eine erhebliche Bandbreite des Signallichtwellenbandes besitzt.

Es versteht sich, daß die Größe der maximalen Verstärkung und deren Welligkeit von der Anzahl der verwendeten Verstärkerstufen 11, 12 ... 1n abhängig ist. Bspw. ergibt sich dadurch eine breite Verstärkungscharakteristik geringer Welligkeit in einem Wellenlängenbereich zwischen 1530 nm und 1560 nm.

## Patentansprüche

1. Faseroptischer Verstärker, mit einem Signallichteingang und -ausgang, die vorzugsweise mit einer Monomodefaser für 1536 nm-Signallicht verbindbar sind, mit einem Signallicht verstärkenden Faserstück, das mit mindestens einem Lanthanoid dotiert ist, und mit einem zwischen Signallichteingang und Faserstück angeordneten wellenlängenselektiven Richtkoppeler, dessen weiterer Eingang mit einer Pumplichtquelle verbunden ist, **dadurch gekennzeichnet,** daß zwei oder mehr in Kaskade geschaltete Verstärkerstufen (11,12 ... 1n) aus einem Faserstück (31,32 ...3n), einem wellenlängenselektiven Richtkoppler (41,42 ... 4n) und einer Pumplichtquelle (51,52 ... 5n) vorgesehen sind, wobei das in Durchlaufrichtung des Signallichtes ausgangsseitige Ende des Faserstücks einer Verstärkerstufe mit dem einen Eingang des Richtkopplers der folgenden Verstärkerstufe verbunden ist, und daß die Faserstücke (31,32 ... 3n) der einzelnen Verstärkerstufen (11,12 ... 1n) hinsichtlich Länge und/oder Dotierung und/oder Grundmaterial zum Erreichen einer maximalen Verstärkung bei unterschiedlichen Wellenlängen unterschiedlich zueinander sind.

2. Faseroptischer Verstärker nach Anspruch 1 , dadurch gekennzeichnet, daß die Faserstücke (31,32 ... 3n) nach Art und/oder Menge der Dotierung unterschiedlich in den einzelnen Verstärkerstufen (11,12 ... 1n) sind.

3. Faseroptischer Verstärker nach Anspruch 1 oder 2, dadurch gekennzeichnet, daß die Faserstücke (31,32 ...3n) in ihrer Fasergeometrie unterschiedlich in den einzelnen Verstärkerstufen (11,12 ... 1n) sind.

4. Faseroptischer Verstärker nach mindestens einem der vorhergehenden Ansprüche, dadurch gekennzeichnet, daß die Pumplichtquelle (51,52 ... 5n) der einzelnen Verstärkerstufen (11,12 ...1n) in ihrer Pumpleistung unterschiedlich sind.

5. Faseroptischer Verstärker nach mindestens einem der vorhergehenden Ansprüche, dadurch gekennzeichnet, daß das Faserstück (31,32 ... 3n) im Bereich von etwa 1 bis 5 m lang ist.

6. Faseroptischer Verstärker nach mindestens einem der vorhergehenden Ansprüche, dadurch gekennzeichnet, daß die Pumplichtquelle (51,52 ... 5n) einen 807nm-Laser aufweist.

7. Faseroptischer Verstärker nach Anspruch 6, dadurch gekennzeichnet, daß der 807nm-Laser ein Druckerlaser, CD-Laser oder dgl. ist.

## Claims

1. A fiber-optic amplifier having a light signal input and a light signal output that can preferably be connected to a monomode fiber for 1536 nm light signals, having a light signal-amplifying fiber piece that is doped with at least one lanthanoid, and having a wavelength-selective directional coupler disposed between the light signal input and the fiber piece whose further input is connected to a pump light source, characterized in that two or more cascade-connected amplifier stages (11, 12 ... 1n) are provided that comprise a fiber piece, a wavelength-selective directional coupler and a pump light source; the output end of the fiber piece of one amplifier stage, seen in the direction of travel of the light signals, is connected to the one input of the directional coupler of the following amplifier stage; and the fiber pieces (31, 32 ... 3n) of the individual amplifier stages (11, 12 ... 1n) differ from each other with regard to length and/or doping and/or basic material for realizing a maximum gain for different wavelengths.

2. A fiber-optic amplifier in accordance with claim 1, characterized in that the fiber pieces (31, 32 ... 3n) in the individual amplifier stages (11, 12 ... 1n) vary in the type and/or quantity of the dopant.

3. A fiber-optic amplifier in accordance with claim 1 or 2, characterized in that the fiber pieces (31, 32 ... 3n) in the individual amplifier stages (11, 12 ... 1n) differ in their fiber geometry.

4. A fiber-optic amplifier in accordance with at least one of the foregoing claims, characterized in that the pump plight source (51, 52 ... 5n) of the individual amplifier stages (11, 12 .. 1n) differ in pump power.

5. A fiber-optic amplifier in accordance with at least one of the foregoing claims, characterized in that the length of the fiber piece (31, 32 ... 3n) is in a range of approximately 1 to 5 m.

6. A fiber-optic amplifier in accordance with at least one of the foregoing claims, characterized in that the pump light source (51, 52 ... 5n) has an 807 nm laser.

7. A fiber-optic amplifier in accordance with claim 6, characterized in that the 807 nm laser is a printer laser, CD laser or the like.

## Revendications

1. Amplificateur à fibre optique présentant une entrée du signal lumineux et une sortie du signal lumineux qui de préférence peuvent être reliées à une fibre monomode pour un signal lumineux sur 1536nm, comportant un morceau de fibre, amplificateur du signal lumineux, qui est dopé d'au moins un lanthanide, ainsi qu'un coupleur directif, sélectif à l'égard de la longueur d'onde, qui est diposé entre l'entrée du signal lumineux et le morceau de fibre et dont l'autre entrée est reliée à une source de lumière de pompage, amplificateur caractérisé par le fait que sont prévus deux ou davantage, étages d'amplification (11, 12 ... 1n) montés en cascade, constitués d'un morceau de fibre (31, 32 ... 3n), d'un coupleur directif (41, 42 ... 4n) sélectif à l'égard de la longueur d'onde et d'une source de lumière de pompage (51, 52 ... 5n), étant précisé que l'extrémité, située du côté sortie dans le sens du passage du signal lumineux, du morceau de fibre d'un étage d'amplification est reliée avec la première entrée du coupleur directif de l'étage d'amplification suivant et que les morceaux de fibre (31, 32 ... 3n) des différents étages d'amplification (11, 12 ... 1n) sont différents l'un de l'autre, en ce qui concerne leur longueur et/ou leur dopage et/ou leur matériau de base, pour obtenir une amplification maximale pour des longueurs d'onde différentes.

2. Amplificateur à fibre optique selon la revendication 1, caractérisé par le fait que les morceaux de fibre (31,32 ... 3n) sont différents dans les différents étages d'amplification (11, 12 ... 1n) en ce qui concerne le type et/ou l'importance du dopage.

3. Amplificateur à fibre optique selon la revendication 1 ou 2, caractérisé par le fait que les morceaux de fibre (31, 32 ... 3n) sont différents, en ce qui concerne leurs caractéristiques géométriques de fibre, dans les différents étages d'amplification (11,12 ... 1n).

4. Amplificateur à fibre optique selon au moins l'une des revendications précédentes, caractérisé par le fait que les sources de lumière de pompage (51, 52 ... 5n) des différents étages d'amplification (11,12 ... 1n) sont différentes en ce qui concerne leur puissance de pompage.

5. Amplificateur à fibre optique selon au moins l'une des revendications précédentes, caractérisé par le fait que le morceau de fibre (31,32 ... 3n) a une longueur sur la plage d'environ 1 à 5m.

6. Amplificateur à fibre optique selon au moins l'une des revendications précédentes, caractérisé par le fait que la source de lumière de pompage (51,52 ... 5n) présente un laser fonctionnant sur 807nm.

7. Amplificateur à fibre optique selon la revendication 6, caractérisé par le fait que le laser fonctionnant sur 807nm est un laser d'imprimante, un laser au dioxyde de carbone CD ou analogue.
